(19) Europäisches Patentamt
European Patent Office
Office européen des brevets

(11) EP 2 570 772 A1

(12) EUROPEAN PATENT APPLICATION

(43) Date of publication:
20.03.2013 Bulletin 2013/12

(51) Int Cl.:
*G01C 21/16* (2006.01)     *G01C 22/00* (2006.01)
*G01C 21/20* (2006.01)

(21) Application number: 12157532.8

(22) Date of filing: 29.02.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.09.2011 EP 11181571**

(71) Applicant: **Deutsches Zentrum für Luft- und Raumfahrt e.V.**
**51147 Köln (DE)**

(72) Inventor: **Robertson, Patrick Dr.**
**82541 Ammerland (DE)**

(74) Representative: **von Kreisler Selting Werner**
**Deichmannhaus am Dom**
**Bahnhofsvorplatz 1**
**50667 Köln (DE)**

(54) **Method for localisation and mapping of pedestrians or robots using wireless access points**

(57) The method for localisation and mapping of pedestrians or robots using Wireless Access Points comprises the following steps:
- Wireless Signal Strength and/or time delay measurements from wireless access points (e.g. Wireless Local Area Network access points (WLAN, Wifi, WIMAX), or mobile radio base stations (e.g. GSM, UMTS, LTE, 4G, IS95 or RFID tags or transmitters) are taken at regular or irregular time instances by a device carried by the pedestrian or robot in addition to odometry measurements (e.g. human step measurements, human pedestrian dead-reckoning, robot or wheelchair wheel counter measurements, robot motor or wheelchair motor control inputs), and
- providing a particle filter which has a state model that comprises the pedestrian or robot location history for each particle, and also the location probability distribution of one or more wireless access points,
- wherein at each time-step of the particle filter each particle of the particle filter is weighted and/or propagated according to the odometry measurements and weighted and/or propagated according to the wireless measurement,
- wherein at each time-step of the particle filter the location probability distribution of the wireless access points for each particle is updated according to the measurement and the previous location probability distribution of that particle, and
- wherein the location of the pedestrian or robot and/or the map of the wireless access point(s) is extracted from the particle population (e.g. from the state of the particle with greatest weight, from the weighted state across all particles, from the state of a randomly chosen particle, from the state of the maximum likelihood particle).

Fig.5

**Description**

The present invention relates to a method for localization and mapping of pedestrians or robots using Wireless Access Points.

The prior art and the invention will be described in detail hereinbelow using abbreviations of individual terms which are explained at the end of the following description, The list of the references describing the prior art can be found also at the end of the specification.

**Introduction**

SLAM is a very challenging topic with origins in the robotics community. Here a robot has to navigate in an unknown environment, relying on different kinds of sensors, e.g. inertial and optical ones [2], In [3] the robot has available RSS measurements from wireless nodes, whose positions are unknown. In this case it is shown that accurate mapping of the nodes improves also the positioning accuracy of the robot.

More recently, the application of the SLAM paradigm to pedestrians has been shown to be an effective way to improve the localization accuracy indoors. Human users are typically not equipped with sensors like lasers or suitably mounted cameras and it is more likely to exploit step measurements collected by an IMU.

The residual cumulative error of the resulting odometry in heading over time leads to instability and could be mitigated by using map information [41-[6]. When the map is not available, as assumed according to the invention, it should be estimated, according to the SLAM paradigm.

FootSLAM [7] and PlaceSLAM [8] are two SLAM algorithms for pedestrians mainly based on step measurements collected by IMUs or other forms of odometry, However, convergence is not guaranteed, especially in open areas. After a brief review of these algorithms, a novel solution for a pedestrian SLAM is described which integrates RSS and/or TOA and/or TDOA measurements available within an IEEE 802.11 (WiFi) network in FootSLAM, showing that an improvement in FootSLAM convergence speed.

**FootSLAM and PlaceSLAM**

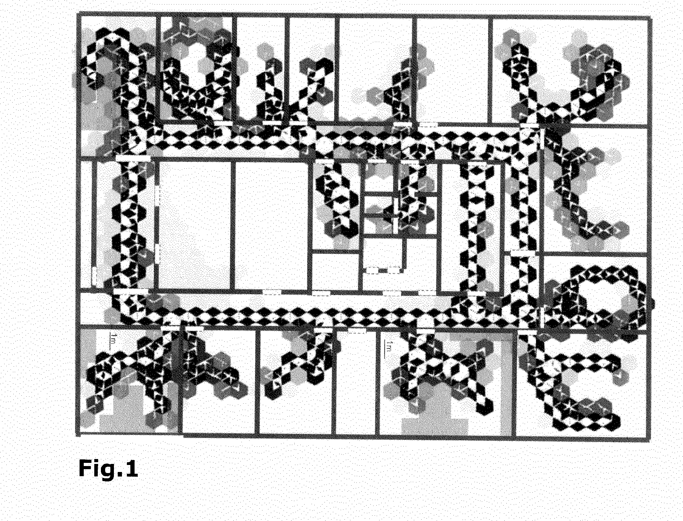

FootSLAM [7] uses a Bayesian estimation approach, where the state is the user's (pedestrian or robot) pose (position and heading) and step measurements (for humans, wheel or motor based-odometry measurements for robots) allow the updating of both the user trajectory and the environment map over time. The implementation employs a RBPF (Rao Blackwellised Particle Filter), where each particle is composed of both a user trajectory instance and its related map. This latter is obtained by partitioning the environment into hexagonal cells and estimating all the transitions probabilities for each visited cell. Extensive experiments show that convergence of both mapping and localization occurs when the user walks on closed loops and sufficient particles are used. The fusion of several datasets (Collaborative FootSLAM) is also dealt with in [15] and an example map is shown in Fig. 1.

In PlaceSLAM [8] proximity information relative to some well recognizable places, e.g. doors, is assumed. The places' locations are initially unknown and thus formally included in the map.

The complexity increase of PlaceSLAM with respect to FootSLAM is light, but convergence is shown to become more reliable.

The invention basically deals with the same framework as in FootSLAM, extending the Map space in a way similar to PlaceSLAM, such to include the WiFi map related to the detected APs, but without the disadvantages of PlaceSLAM (human interaction, whereas WiSLAM requires no human interaction).

**IEEE 802.11**

IEEE 802.11 is today the most used WLAN technology. In the infrastructure topology, the AP is the unit that forwards data towards the UE or to a connected network.

There are many versions of the standard, the most common being respectively indicated by the letters a,b,g and n, in which the differences are mainly relative to the bit rates achievable and other features. In detail, it is focused on 'b' and 'g' versions for two reasons: they are actually the most widespread versions of WiFi, and they work in the ISM band (about 2.45 GHz) while the other standards work at higher frequencies (about 5 GhZ), where obstacles effects are typically more pronounced.

For the communication task they employ Direct Sequence Spread Spectrum (DSSS) modulation with a maximum allowed bit rate of 11 Mbps in the 'b' version and 54 Mbps in the 'g' version. Furthermore, the standard sets the maximum transmission power to 100 mW, yielding a coverage distance of tens of meters up to one hundred meters depending on the environment. What is of particular interest to us is that beacon frames are periodically emitted by all APs for network tasks, such as the synchronization. Since the resolution of the clocks in off-the-shelf APs (about 1 $\mu$s)

is too coarse for yielding an accurate distance estimation and MIMO antennas are not employed, both TOA and AOA techniques are not suitable, unless employing additive hardware, with a raising of the costs.

Anyway, the RSS of the beacon frame emitted by the AP is measured by the receiver and made available to high level applications. Therefore, such information can be exploited by a localization system. Note that, even if the standard indicates 8 bit (256 levels) quantization for the RSSI measure, it does not define the resolution nor the accuracy of the measurement itself, that are normally unavailable to the user. Common resolutions are, however, -100 dBm to 0, with 1 dBm sized steps. Similarly, the state-of-the-art knows TOA or TDOA solutions to estimate the distances from the AP (in the case of TOA) or a location hyperbola (for TDOA with a pair of APs).

The main problem with RSS measurements is that the HW and SW implementers do not usually report how signal measurements are implemented, their statistical correlation and the real emitted power. All these issues will be dealt with through suitable design choices.

### RSS measurements

Some models for the RSS measurements are employed, whose validation is given together with the results. The RSS measurements are considered from different APs independent given the user's position and, furthermore, AP's positions are independent. This allows us to compute the contribution of each AP independently. Moreover, different measurements from the same AP are also conditionally independent.

Given the current Euclidean distance $r_k$ of the user from the AP, located by $X_{AP,}$ a likelihood function has to be assigned to the RSS measurements. It is advantageous for simplicity's sake to assume a Gaussian likelihood with variance $\sigma^2$ and mean $h(r_k)$ given by a propagation model for the signal. Even if more complicate models could be used to account for many non ideal effects like multipath or obstacles, it is advantageous to employ a very simple path loss model [8]

$$h(r_k) = h - 20\alpha \log_{10}\left(r_k/d_0\right) \qquad (1)$$

where $h$ is the power emitted by the AP, accounting also for the antenna orientation and gain, $\alpha$ is the propagation exponent, usually varying from 2 (free space) up to 4 in real cases and do is a known reference distance. Note that both $h$ and $\alpha$ are usually unknown, and $h$ is found to vary strongly for different APs with dramatic effects on the mapping, unless it is learnt. This is why both $x_{AP}$ and $h$ are introduced in the WiFi map. Less sensitivity to $\alpha$ was found and thus for simplicity its value is fixed (in the results of the experiments reported later $\alpha$ is set as 2), even if its estimation could be easily inserted in the WiFi map. A similar likelihood function describing the probabilistic relationship between the location of the user and the measurement can be constructed trivially for TOA or TDOA measurements (a circular function for TOA like RSS for each AP and a hyperbola for TDOA for each pair of APs).

### Representation of the prior art

SLAM was first applied to robots which may use several kinds of sensors, e.g. inertial ones and cameras [2]. The integration of RSS measurements from a WLAN is studied in [3]. Nevertheless, in this paper the overall accuracy is still due mainly to the inertial sensors.

SLAM for pedestrians in indoor areas is based on the consideration that information on the environment map (walls, doors, etc) is very useful in improving the localization accuracy [4]-[6].

FootSLAM [7] and PlaceSLAM [8] use a Bayesian estimation approach, where the state is the user's pose (position and heading) and step measurements (odometry) allow the updating of both the user trajectory and the environment map over time. In the case of PlaceSLAM also proximity information relative to some well recognizable places, e,g. doors, is assumed to enhance the convergence capabilities. These algorithms will be analyzed more deeply later.

RSS-based indoor localization has been widely addressed in the past, and accuracies up to 2 meters are typically shown. The most used approaches are mainly based on fingerprinting (whose first implementation was RADAR [9]): 1) in a previous off line stage a radio map of the environment is built up with measurements collected over a set of known points and 2) in the localization stage the new RSS is compared to the stored ones to estimate the user's position. Other more recent approaches range from probabilistic techniques [10] to more complex models, e.g. support vector machines [11].

Some authors have recently exploited the idea of using also RSS measurements from *unknown* APs. In [12] RSS from both known and unknown APs are fused together within a probabilistic framework, showing an improvement in the localization accuracy, due to a discrete mapping ability for the unknown APs. The major drawbacks are that a partial knowledge of the map is in principle necessary and, moreover, the experimental results presented are quite poor.

In [13], instead, SLAM employing only unknown APs is shown to work, but heavy constraints on the user's movement are imposed, how it is clear from the experimental results. Finally, in [14] a similar problem is approached but in a totally different framework leading to a very different solution and only qualitative results are shown.

**What is the challenge and the technical problem underlying the invention, purpose of the invention?**

An object of the invention is to localize a pedestrian or robot within e.g. an indoor area, such as a building or within an area close to buildings or within an urban area. One can use measurements from two kinds of sensors:

- IMU (one dimensional or multiple, e.g. three dimensional) mounted in a shoe of the pedestrian or other part of the body, or, in particular when positioning a robot or human in a wheelchair, any form of human or robot odometry, such as wheel counters, motor control signals, or step detection based human dead-reckoning; in the sequel the application will be described using the pedestrian case, but the extension to the robot or wheelchair case is trivial, by replacing the estimated human step $Z^{l,l}_{.,j}$ by the robot odometry measured over a suitable time interval (e.g. once per second); in the following, odometry is used to refer the measurement regarding the movement of the subject, regardless of the source of the odometry or the kind of subject (human/robot)

- A receiver that can be used to receive radio signals transmitted from transmitters (e.g. access points, APs) that are located in the surroundings, For example, an e,g IEEE 802.11 b/g ("Wifi", "Wireless-LAN", "W-LAN") compliant receiver which is able to measure the Received Signal Strength (RSS) and address (e.g. media access address, MAC or SSID) from the detected APs. Other kind of radio signals include mobile radio systems such as GSM, UMTS, 4G, WiMAX, LTE, IS95 or those from active or passive radio frequency identification (RFID) tags or the respective transmitters. In addition, or alternative to collecting the RSS, signal propagation delay measurements (often called time-of-arrival (TOA) or time-difference-of-arrival (TDOA)) may be taken, which also give information about the distance between receiver and transmitter. The RSS case is presented, but the signal latency case is a trivial extension and in fact a simplification, as no transmit power needs to be estimated as part of the state model.

It is well known how the building map is of great importance in using IMUs based localization algorithms, and also APs' positions are essential in using RSS or signal latency measurements. When this information is not available or outdated, a human operator must collect it manually. Moreover, this operation should be repeated periodically, since especially APs' positions can change over time.

To avoid tedious and costly mapping phases, a SLAM-approach (SLAM: Simultaneous Localization and Mapping) is proposed here in which both localization and mapping are performed together starting from the collected data. In a real world application building on this application, localization can be performed using the maps generated by SLAM, without performing SLAM a second time.

Specifically, in the present invention, named WiSLAM (see also [1]), the fusion of odometry and RSS measurements will improve the performance obtained by other systems only employing odometry such as FootSLAM [7] and WO-A-2011/033100. In particular, it is suited to speed up and stabilize their convergence and avoid their problems in open areas, since the old methods work on the peculiar hypothesis that the user runs the same loop many times and that the environment is sufficiently constrained by walls and other obstacles.

**What features and/or combinations of features characterize the novelty of the invention?**

The present invention relates to the subject matter of claim 1. The dependent claims relate to individual embodiments and aspects of the invention.

WiSLAM makes only use of step and RSS measurements (and/or TOA and/or TDOA) collected by a foot-mounted IMU (or other odometry sensor) and IEEE 802.11 b/g compliant receiver or any other receiver such a mobile radio. Reference is made to the treatment of IMU's data to [7]. The IEEE 802.11 b/g APs is presented in the following as a suitable example, without restriction of generality.

The invention is based on the FootSLAM framework, integrating also RSS measurements from an e.g. IEEE 802.11 (WiFi) network, but can be trivially extended to use signal latency measurements such as TDO or TDOA. It is different from PlaceSLAM since RSS or TDO/TDOA measurements provide distance information that is more valuable than just proximity information. This is why, despite a more involved computation, better accuracy is expected, Moreover, the invention requires no human interaction or elements such as RFID tags.

**Advantages of the invention over the prior art**

The SLAM approach provides a useful tool for avoiding periodical and costly mapping operations performed manually, like in [4]-[6]. With respect to [7], the addition of WiFi measurements does not represent a cost since APs are typically deployed in most buildings and almost all up-to-date smart phones and laptops are equipped with WiFi receivers, but can improve convergence speed of the algorithm. The advantage over [8] is that distance information (implicit in RSS measurements) is finer than proximity information and, moreover, RSS data are collected in an automatic way, while location measurements in PlaceSLAM can be also manual.

The systems in [12] and [13] respectively, relying only on WiFi measurements, are less accurate than it could be expected by a suitable fusion with odometry data. According to the invention, in fact WiFi measurements are used mainly to select the most likely map and trajectory from the 'hypotheses' provided by odometry.

The present invention is described herein in more detail, referring to the drawings in which

Fig. 1     shows an example of a map generated by Cooperative FootSLAM, i.e. derived from the fusion of several datasets.

Fig. 2     is an acquisition and prefiltering diagram block;

Fig. 3     is an algorithm block diagram at instant k;

Fig. 4     shows simulative results wherein a user walks along the dotted path and collects RSS from AP at the points marked by small circles. The full circle denotes its current position. The pdf of the AP's position is depicted through a density plot (high values darker) at the instants k=1,3,5,7,9,11. For these simulations known H, RSS standard deviation $\sigma$=5 dB is assumed;

Fig. 5     shows an approximated WiSLAM implementation as an initialization scheme. Variables in hexagons are global; the ones in ovals need being created for all particles. T "release" a variable means that it is not used anymore and thus the related instance in the program can be erased;

Fig. 6     shows an example of intersection points between 3 donuts relative to 3 different measurements; since the points lie in a circle with radius $\gamma$ they are considered a single point. A sparse sampling in its neighborhood is performed to extract the peak parameters;

Fig. 7     shows an approximated exemplary WiSLAM implementation - recursive updating scheme;

Fig. 8     shows the reference system change from (x,y) to (a,b);

Fig. 9     shows an experimental testbed adopted for real world results. The final pdfs are shown for both APs' positions produced by one of the datasets;

Fig. 10    shows a mapping for single AP wherein real data collected during a walk are employed to map the AP's position (a-e) and reference signal strength (f). For the meaning of the symbols see Fig. 2. The environment is the one depicted in Fig. 9 and is here omitted for clarity;

Fig. 11    shows competing paths. Products (normalized) of the $l_{W}^{i}$ terms for both paths in Fig. 9, averaged on ten datasets, in the cases of (a) only AP~1 involved and (b) both APs involved. The line related to the real path is dotted with circles;

Fig. 12    shows a performance obtaining by the approximated algorithm in the same case as in Fig. 10(a). The algorithm is started after T=5 measurements;

Fig. 13    shows experimental results wherein map generated by Algorithm 3 (in hexagons) overlapped to the floor real map (testbed of Fig. 9). The polygons represent the furniture inside the rooms. The main mistake in the building map is highlighted by an empty black rectangle (the right path is within the room on the right). In squares it is drawn the real position of the APs, while in circles (with the same features) their estimation is shown; and

Fig. 14    shows experimental results wherein map generated by Algorithm 3 (in hexagons with $l_{M}^{i}$ in eq. (10) set to constant values (only WiFi measurements contribution) overlapped to the floor real map (testbed of Fig. 9). The polygons represent the furniture inside the rooms. The main mistakes in the building map are highlighted by an empty black rectangle (the right path is within the room on the right). In squares it is drawn the real position of the APs, while in circles (with the same features) their estimation is shown.

In what follows the notation summarized in the following Table 1 is used.

Table 1 - Notation used in the patent

| WiSLAM Notation | |
|---|---|
| $P_{ij}$ | User's pose history from instant i to j, consisting of 2D position and heading |
| $U_{ij}$ | Step sequence from I to j |
| $E_{ij}$ | State vector encoding IMU's correlated errors from i to j |
| M | Map of the environment, consisting of physical barriers limiting the user's motion |
| W | WiFi map, consisting of AP's position $x_{AP}$, and emitted power $h$ (*when using RSS*) |
| $Z_{ij}^{U}$ | Step measurement history from i to j (observable from IMUs) (odometry measurement) |
| $Z_{ij}^{W}$ | RSS measurements from i to j (observable from WiFi receiver) |

**Algorithm description**

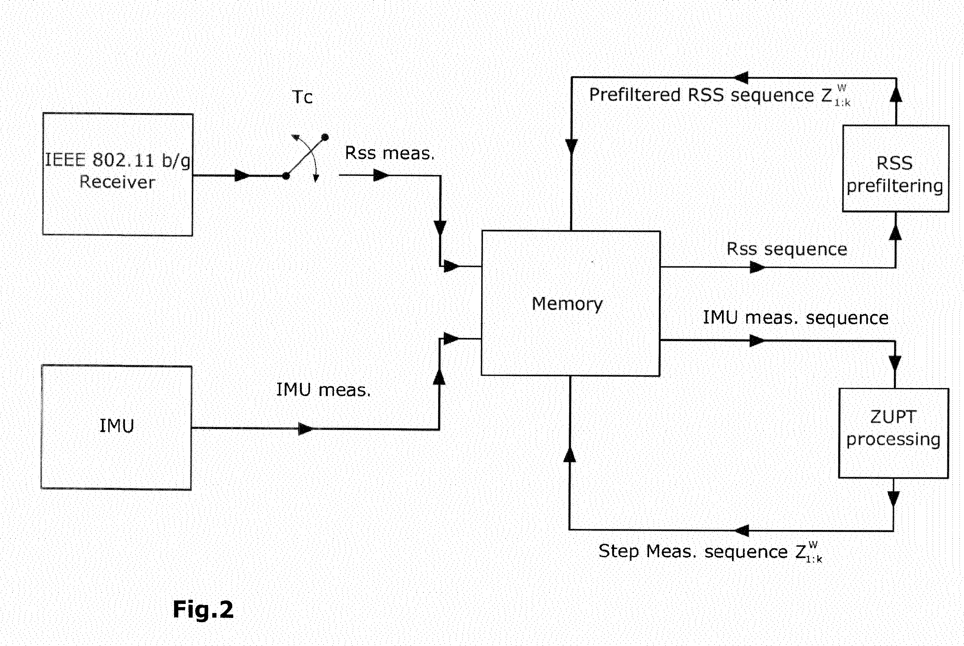

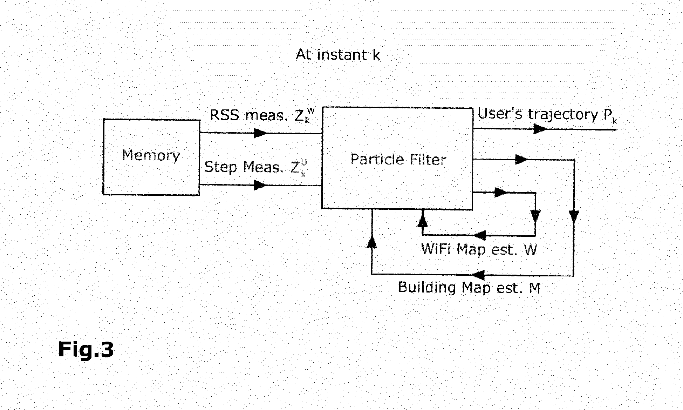

In Figs. 2 and 3 there is shown a high level block diagram of the algorithm. In Fig. 2 acquisition and prefiltering operations are depicted. First, IMU's and RSS measures are collected and stored in a memory (for the RSS measurements a sampling is required at a given rate). After the acquisition stage, RSS' and IMU's data sequences can be processed off line. RSS sequences can be prefiltered either in a causal or in a non causal way; for instance the algorithm can

- detect and eliminate outliers

- eliminate measurements that are too weak to be useful

- increase sampling period to reduce correlation between data.

ZUPT processing is applied in the case where odometry is based on IMU's measurements to get a sequence of step measurements (odometry) [17]. If different forms of odometry are used then this step will differ; it is well known in the art how to generate odometry from other sensors, whether step detection, wheel counters, visual odometry from cameras or other methods).

In Fig. 3 a particle filter is given preprocessed measurements and with its own previous map estimations (both building and WiFi map) to provide a trajectory of the user and new maps.

In a Bayesian formulation, the estimator implicitly or explicitly evaluates:

$$p\left(\{PUE\}_{0:k}, W, M \mid Z_{1:k}^{U}, Z_{1:k}^{W}\right) \qquad (2)$$

of both the state histories and the maps given odometry and RSS measurements, which can be written as

$$p\left(M \mid P_{0:k}\right) \cdot p\left(W \mid P_{0:k}, Z_{1:k}^{W}\right) \cdot p\left(\{PUE\}_{0:k} \mid Z_{1:k}^{U}, Z_{1:k}^{W}\right). \qquad (3)$$

Following a similar argument as in the FootSLAM derivation [7], the last term in eq. (3) admits a recursive formulation based on the independence relationships encoded in the corresponding Dynamic Bayesian Network DBN:

6

$$p\left(\{PUE\}_{0:k}\mid Z_{1:k}^{U},Z_{1:k}^{W}\right)\propto p\left(Z_{k}^{U}\mid\{UE\}_{k}\right)\cdot p\left(Z_{k}^{W}\mid P_{0:k},Z_{1:k-1}^{W}\right)\cdot p\left(E_{k}\mid E_{k-1}\right)$$

$$p\left(\{PU\}_{k}\mid\{PU\}_{0:k-1}\right)\cdot p\left(\{PUE\}_{0:k-1}\mid Z_{1:k-1}^{U},Z_{1:k-1}^{W}\right). \quad (4)$$

The novelty in WISLAM with respect to FootSLAM is the RSS likelihood term.

From eq. (3) it is clear that the W map can have a strong influence on the posterior (2) (3) and hence (4). A shortcut is defined as follows:

$$I_{W}\triangleq p\left(Z_{k}^{W}\mid P_{0:k},Z_{1:k-1}^{W}\right)=\int_{W}p\left(Z_{k}^{W}\mid W,P_{k}\right)\cdot p\left(W\mid P_{0:k-1},Z_{1:k-1}^{W}\right)dW.$$

The above integral is over a 3 or 4 dimensional space, depending on whether the estimator is working in 2 or 3 spatial dimensions (the additional dimension is the access point transmit power): the spatial dimensions are continuous or discrete (the AP's position), the access point transmit power can be discrete or continuous, but it is advantageous to chose a discrete representation. These considerations allow us to marginalize over h

$$I_{W}=\sum_{h=1}^{N_{h}}\mathrm{Pr}\left(h_{h}\mid P_{0:k-1},Z_{1:k-1}^{W}\right)\cdot\int_{W}p\left(Z_{k}^{W}\mid W,h_{h},P_{k}\right)\cdot p\left(x_{AP}\mid h_{h},P_{0:k-1},Z_{1:k-1}^{W}\right)dW. \quad (5)$$

The last point to consider is map learning which is the "M" part of SLAM. The FootSLAM map M is evaluated as in FootSLAM [7,eq. (4)]. With the factorization

$$p\left(W\mid P_{0:k},Z_{1:k}^{W}\right)=p\left(x_{AP}\mid h,P_{0:k},Z_{1:k}^{W}\right)\cdot p\left(h\mid P_{0:k},Z_{1:k}^{W}\right), \quad (6)$$

the WiFi map estimation is split into two separate tasks. To determine the probabilities for $h_{h}$ and assuming a suitable prior, e.g, uniform, a Bayes rule is applied to express:

$$\mathrm{Pr}\left(h_{h}\mid P_{0:k},Z_{1:k}^{W}\right)\propto p\left(Z_{k}^{W}\mid h_{h},P_{0:k},Z_{1:k-1}^{W}\right)\cdot\mathrm{Pr}\left(h_{h}\mid P_{0:k-1},Z_{1:k-1}^{W}\right). \quad (7)$$

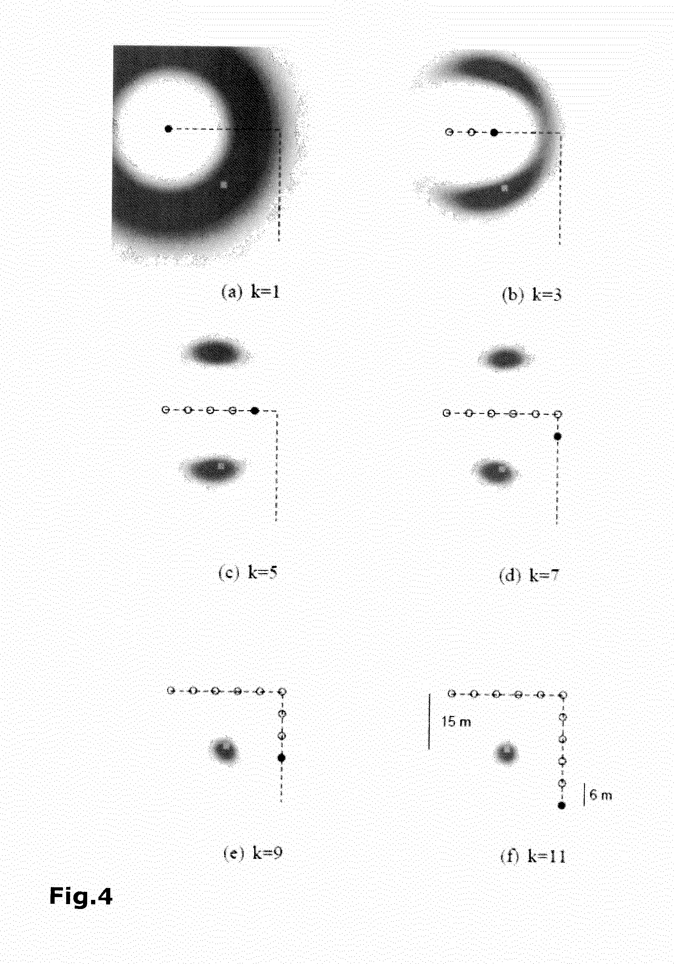

More insight is needed when looking at the estimation of the AP's position XAP given h, In Fig. 4 there are shown the results of a simulative experiment which makes the discussion clearer: a user walks along the dotted path and collects RSS from an AP, drawn according to the models given above (a standard deviation of a=5 dB is assumed for the RSS noise). Finally, a density plot (higher values are darker) is used to depict the PDF. At k=1 the PDF is simply (see Fig.4a)

$$p\left(x_{AP}\mid h_{h},P_{0:1},Z_{1}^{W}\right)\propto p\left(Z_{1}^{W}\mid h_{h},x_{AP},P_{1}\right),$$

that is a donut-shaped function centered on the user and whose radius is related to the distance from the AP. For k>1, the following iteration is performed

$$p\left(x_{AP}\mid h_{h},P_{0:k},Z_{1:k}^{W}\right)\propto\prod_{s=1}^{k}p\left(Z_{s}^{W}\mid h_{h},x_{AP},P_{s}\right), \quad (8)$$

that is the normalized product of k non concentric donut-shaped functions. As the user walks along a straight line, the initial donut evolves into two peaks, one centered on the AP and the other in its symmetrical position (Fig. 4.b-c). After a corner, only the correct peak survives, that is further sharpened by subsequent RSS measurements (Fig. 4.d-f).

The complete map is thus a mixture of $N_H$ 'donuts' products, in which the coefficients, that are the probabilities for $h_h$ (last term in eq. (7)), also evolve over time. This applies also directly to the TOA measurement case and in a modified form to the TDOA case, where the peaks are where hyperbola shaped donuts intersect (instead of circular donuts).

**Algorithm implementation**

For a PF implementation of the Bayesian filter, it is advantageous to sample from the 'likelihood PF' proposal density [7], [15] or a similar density function:

$$p\left(U_k \mid Z_k^{U}, E_k^{i}\right) \cdot p\left(E_k \mid E_{k-1}^{i}\right). \qquad (9)$$

The RSS (and/or TOA / TDOA) contribution is a further multiplicative factor (or additive when working with logarithmic representations which can be an advantage for numerical stability or computational performance reasons as is well known when applying probabilistic algorithms) in the particle weights

$$w_k^{i} \propto w_{k-1}^{i} \cdot I_{M}^{i} \cdot I_{W}^{i}, \qquad (10)$$

where $I_{M}^{i}$ is relative to the Map M estimation [7,eq.(4)] and $I_{W}^{i}$ is a sufficient numerical approximation for $I_w$ in eq. (5). The problem with $I_w$ is that the integrand function in eq. (5) is nonparametric in nature. An advantageous solution is to sample it over a static or dynamic grid of $X_{AP}$ values in the area of interest. The next section describes a computationally more inexpensive solution to this sampling.

**Approximated implementation for WiSLAM**

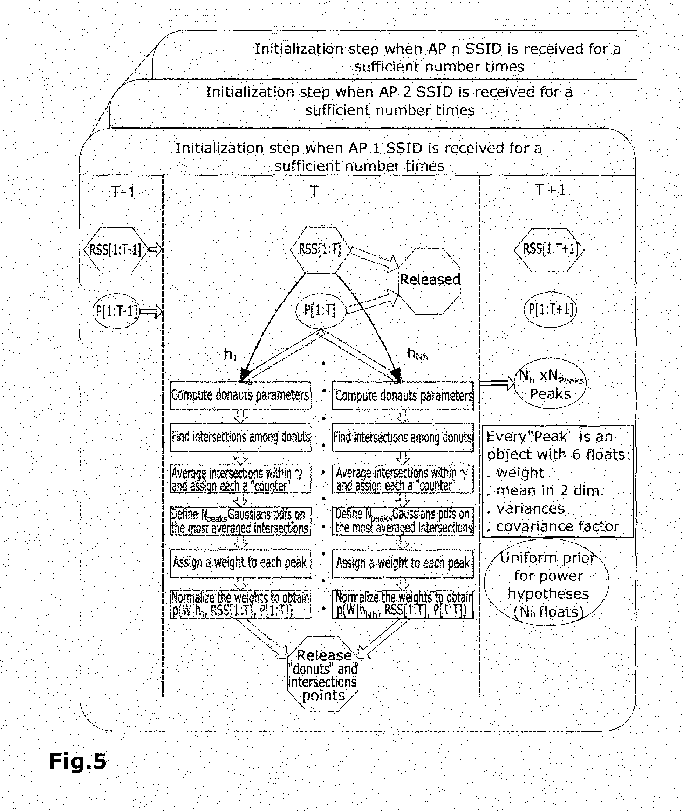

In order to give a computationally efficient version of the sampling for WiSLAM the schemes in Figs. 5 to 7 are proposed, based on the consideration that after few instants the $X_{AP}$ PDF is usually composed of a sum of 'peaks'. An advantageous choice is to assign a GMM to the $x_{AP}$ PDF at step k in eq. (8)

$$p\left(x_{AP} \mid h_h, P_{0:k}, Z_{1:k}^{W}\right) \approx \hat{p}\left(x_{AP} \mid h_h, P_{0:k}, Z_{1:k}^{W}\right) = \sum_{p=1}^{N_{peaks}} \tilde{u}_{p,h,k} f_{p,k}\left(x_{AP}, h_h\right), \qquad (11)$$

where $\bar{u}_{p.h.k}$ is the coefficient for the p-th peak, normalized such that $\sum_{p=1}^{N_{peaks}} \tilde{u}_{p.h.k} = 1$, and for the peak function $f_{p.k}(x_{AP},$ $h_h)=-N(\mu_{p.h.k}, S_{p.h.k})$ a Gaussian distribution is proposed with mean $\mu_{p.h.k}$ and covariance matrix $S_{p.h.k}$

Now the following three steps have to be discussed:

1. initialize the GMM when the algorithm is started;
2. update it recursively when a new RSS is available;

3. compute the weights $I_{W}^{i}$ and update $h_h$, probabilities.

**Initialization**

The initialization step reproduced in the scheme of Fig. 5 is triggered according to a suitable rule. For example, one could introduce a static or dynamic number of RSS measurements $T$ ($T \geq 1$) from a new AP, required for triggering the initialization step. Its goal is to build the approximated WiFi map W in eq. (6) given the collected RSS and the path assumed by each particle.

For a given AP identified by its unique SSID, at step T the *h* distribution should be assigned between the proposed $N_H$ values and one of the possible choices, useful when no prior information is available about the APs, is to use a uniform distribution. The $x_{AP}$ PDF, instead, is given by the GMM in eq. (11). The main problem is to find the GMM parameters, i.e. to estimate peaks' positions and parameters, preferably, only employing the sequence of measurements and poses. To this task, the steps described in Algorithm 1 and sketched in Fig. 5 are advantageously applied.

**Algorithm 1 (GMM initialization)**

If k<T RSS measurements are available from an AP with a given SSID

- keep storing in memory the RSS and user's poses until k, without any processing.

If k=T for all particles and power levels $h_h$, $h = 1...N_H$

- compute from all measurements mean $\hat{r}_k$ and standard deviation $\sigma_{G,k}$ of their likelihood function according to (it is advantageous to consider mean and standard deviation of the range lognormal distribution)

$$\hat{r}_k = d_0 \cdot \exp\left\{ \frac{h_h - Z_k^{u'}}{\zeta} + \frac{\sigma^2}{2\zeta^2} \right\} \qquad (12)$$

$$\sigma_{G,k} = \hat{r}_k \cdot \sqrt{\exp\left\{ \frac{\sigma^2}{\zeta^2} \right\} - 1} \qquad (13)$$

with suitable choice being $\zeta = \dfrac{20\alpha}{\log 10}$,

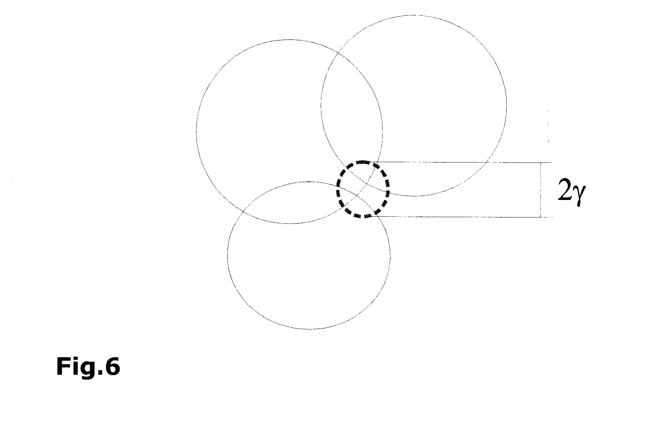

- find all intersection points among whatever couples of donuts
- average those intersecting points that lie within a circle of radius $\gamma$ (a reasonable value is $\gamma = 2$ - see Fig. 6 for an example) and assign to the averaged point a count relative to its relevance, for example equal to the number of intersecting donuts from which it is obtained
- for each of the $N_{peaks}$ averaged points with the highest counts extract sample mean and covariance matrix of the related peak, for example by sampling the true $X_{AP}$ PDF in its neighborhood over a static or dynamic grid
- compute the normalized coefficients

$$\bar{u}_{p,h,T} = \frac{u_{p,h,T}}{\displaystyle\sum_{p=1}^{N_{peaks}} u_{p,h,T}},$$

with a suitable choice being $u_{p,h,T} = \left\| S_{p,h,T} \right\|^{1/2} p\left( \mu_{p,h,T} \mid h_h, P_{0,T}, Z_{1,T}^{u'} \right)$ proportional to the $x_{AP}$ PDF evaluated in $\mu_{p,h,T}$ in reference to the previously described Bayesian framework.

After that, only the peaks' parameters and coefficients involved in eq. (11) need to be stored in a computer memory, while the other variables can be removed from the computer memory not being used anymore.

**Recursion and weights computation**

For k>T, at any new RSS measurement the algorithm has to update in a recursive way the W PDF, i.e. peaks' parameters and coefficients using only current RSS $Z_k^{W'}$ and user's pose $P_k$.

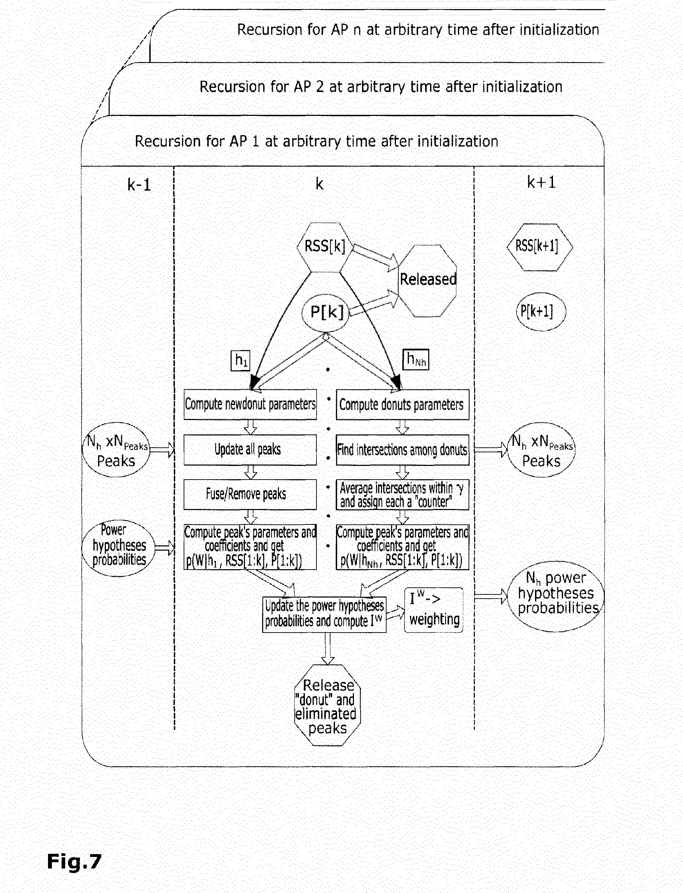

A suitable procedure is described in algorithm 2 and sketched in Fig. 7,

**Algorithm 2 (GMM recursion)**

For all particles at instant k>T

- For all reference powers

    - Compute the mean and variance of the new donut, again as in eqs. (12) and (13)
    - Update all peaks' parameters and coefficients (see next)
    - Useful in saving computer memory storage, fuse peaks whose means get closer than a threshold (a good choice can be, among the others, the same $\gamma$ as before in the initialization)
    - In the same way it is useful to erase those peaks whose new coefficients are too low (for example $10^{-6}$ times the maximum coefficient)

- Compute $I_{W'}^i$ of eq. (5)

$$I_{W'}^i = \sum_{h=1}^{N_H} \left[ \Pr\left(h_h \mid P_{0:k-1}^i, Z_{1:k-1}^{W'}\right) \sum_{p=1}^{N_{peaks}} u_{p,h,k}^i \right]$$

and the new hypotheses probabilities of eq. (7) by applying the proposed approximations

$$\Pr\left(h_h \mid P_{0:k}^i, Z_{1:k}^{W'}\right) = \frac{\Pr\left(h_h \mid P_{0:k-1}^i, Z_{1:k-1}^{W'}\right) \sum_{p=1}^{N_{peaks}} u_{p,h,k}^i}{\sum_{h=1}^{N_H} \left[ \Pr\left(h_h \mid P_{0:k-1}^i, Z_{1:k-1}^{W'}\right) \sum_{p=1}^{N_{peaks}} u_{p,h,k}^i \right]}$$

- Normalize the coefficients $u_{p,h,k}^i$ over p to obtain finally

$$\bar{u}_{p,h,k}^i = \frac{u_{p,h,k}^i}{\sum_{p=1}^{N_{peaks}} u_{p,h,k}^i}$$

Now the procedure to update peaks' parameters and coefficients is described.

Let $\mu_{p,h,k-1}$ and $S_{p,h,k-1}$ be mean and covariance matrix respectively of the p-th peak for the reference power h and $\tilde{u}_{p,h,k-1}$ its coefficient in the GMM at the instant k-1. Let also $r_k$ and $\sigma_{G,k}$ be the parameters related to the new RSS likelihood computed preferably as in eqs. (12) - (13) respectively. An advantageous way of computing the new peak's parameters follows accordingly to the procedure in Fig.7, and described henceforth. Both the translation and the rotation of the reference system are not necessary but are advantageous in a practical implementation because they allow easier computation (an equivalent procedure can be straightforwardly obtained avoiding the translation and rotation by applying simple geometric transformations to the expressions):

- For simplicity, switch to the reference system *(x,y)* centered on $P_k$, by subtracting $P_k$ from the mean $\mu_{p,h,k-1}$ ($\mu_{p,h,k-1}$ is still used to denote it for simplicity)

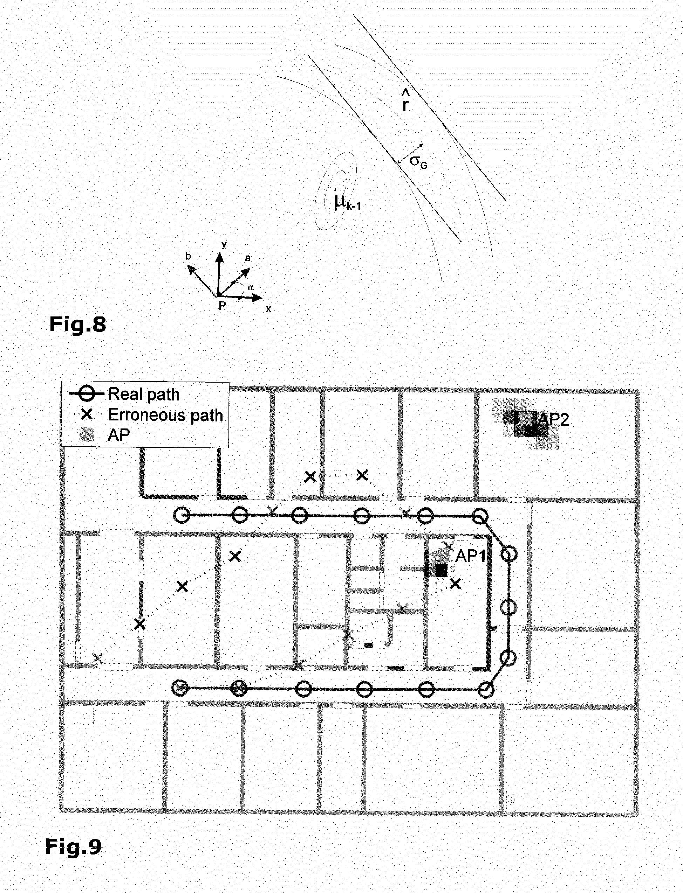

- It is considered that the line joining the origin of *(x, y)* to $\mu_{p.h.k-1}$ and $\alpha$ be the angle produced by a counter clockwise rotation of the axis *x* to that line (see Fig. 8). Therefore, it is denoted $\mu_{p.h.k-1}$ and $S_{p-h-k-1}$ in the reference system *(a,b)* by

$$\begin{cases} \mu_{p.h.k-1}^{R} = T(\alpha)\mu_{p.h.k-1} \hat{=} \left[\mu_{a.k-1}^{R}, 0\right] \\ S_{p.h.k-1}^{R} = T(\alpha)S_{p.h.k-1}T'(\alpha) \hat{=} \begin{bmatrix} \sigma_{a.k-1}^{2} & \rho_{k-1}\sigma_{a.k-1}\sigma_{b.k-1} \\ \rho_{k-1}\sigma_{a.k-1}\sigma_{b.k-1} & \sigma_{b.k-1}^{2} \end{bmatrix} \end{cases}$$

with $T(\alpha) = \begin{bmatrix} \cos(\alpha) & \sin(\alpha) \\ -\sin(\alpha) & \cos(\alpha) \end{bmatrix}$ rotation matrix and the apex meaning transposition.

- In this reference system the peak's parameters

$$\begin{cases} \mu_{p.h.k}^{R} \hat{=} \left[\mu_{a.k}^{R}, \mu_{b.k}^{R}\right] \\ S_{p.h.k}^{R} \hat{=} \begin{bmatrix} \sigma_{a.k}^{2} & \rho_{k}\sigma_{a.k}\sigma_{b.k} \\ \rho_{k}\sigma_{a.k}\sigma_{b.k} & \sigma_{b.k}^{2} \end{bmatrix} \end{cases}$$

are updated by means of the following equations

$$\rho_{k}^{2} = dd', \sigma_{a.k} = \sqrt{\frac{e'}{1-dd'}}, \sigma_{b.k} = \sqrt{\frac{e}{1-dd'}}, \mu_{a.k} = \frac{c' + c\rho_{k}\sqrt{e'/e}}{1-dd'}, \mu_{b.k} = \frac{c + c'\rho_{k}\sqrt{e/e'}}{1-dd'}$$

where the coefficients c,d,e,c',d',e' are introduced for brevity and are given by

$$\begin{cases} c = -\rho_{k-1}\dfrac{\sigma_{b.k-1}}{\sigma_{a.k-1}}\mu_{a.k-1}, d = \rho_{k-1}\dfrac{\sigma_{b.k-1}}{\sigma_{a.k-1}}, e = \sigma_{b.k-1}^{2}\left(1-\rho_{k-1}^{2}\right), \\ c' = \dfrac{\sigma_{G.k}^{2}\mu_{a.k-1} + \sigma_{a.k-1}^{2}\left(1-\rho_{k-1}^{2}\right)\hat{r}}{\sigma_{G.k}^{2} + \sigma_{a.k-1}^{2}\left(1-\rho_{k-1}^{2}\right)}, d' = \dfrac{\rho_{k-1}\dfrac{\sigma_{a.k-1}}{\sigma_{b.k-1}}\sigma_{G.k}^{2}}{\sigma_{G.k}^{2} + \sigma_{a.k-1}^{2}\left(1-\rho_{k-1}^{2}\right)}, e' = \dfrac{\sigma_{G.k}^{2}\sigma_{a.k-1}^{2}\left(1-\rho_{k-1}^{2}\right)}{\sigma_{G.k}^{2} + \sigma_{a.k-1}^{2}\left(1-\rho_{k-1}^{2}\right)} \end{cases}$$

and $\rho_k$ being the square root of $\rho_k^2$ preserving the sign of $\rho_{k-1}$ (this is always possible since $\rho_{k-1}^{2} \geq \rho_{k}^{2}$).

- $\mu_{p.h.k}^{R}$ and $S_{p.h.k}^{R}$ should now be rotated by the angle -$\alpha$ through the matrix $T(-\alpha)$ and $P_k$ must be added to the mean to obtain mean and covariance matrix of the updated peak in the initial reference system

$$\begin{cases} \mu_{p.h.k} = T(-\alpha)\mu_{p.h.k}^{R} + P_{k} \\ S_{p.h.k} = T(-\alpha)S_{p.h.k}^{R}T'(-\alpha) \end{cases}$$

For the unnormalized coefficients $u^i_{p,h,k}$, a suitable choice is

$$u^i_{p,h,k} = \widetilde{u}^i_{p,h,k-1} \frac{f_{p,k-1}(\mu_{p,h,k},h_h)p(Z^W_k \mid \mu_{p,h,k},h_h,P_k)}{f_{p,k}(\mu_{p,h,k},h_h)},$$

that can be normalized to obtain the coefficients of the new GMM

$$\widetilde{u}^i_{p,h,k} = \frac{u^i_{p,h,k}}{\sum_{p=1}^{N_{Peaks}} u^i_{p,h,k}}.$$

## Summary of the approximated WiSLAM

The full algorithm for approximated WiSLAM is summarized in terms of the algorithms 1 and 2.

When using time delay measurements $N_H$ is set to 1 and equation (12) is replaced by a suitable likelihood function (e.g. Gaussian over ^$\Gamma_k$ parametrised on the time delay by taking into account the speed of light (for the mean of ^$\Gamma_k$) and its variance or spread depending on the time delay measurement uncertainty of the radio time delay processing unit.

When using RSS with known transmit power, one sets $N_H$ is to 1.

## Algorithm 3 (Approximated WiSLAM)

Initialization:

- Initialize all $N_p$, particles of a particle filter to, for example, $P^i_0 = (x, y, h = 0)$ where *x, y* and *h* denote the pose (location and heading) in two dimensions (extensions to three dimensions are straightforward by adding the z-dimension to the pose); draw $E^i_0$ from a suitable initial distribution for the odometry error state.

Then, for each time step increment k and all particles:

- Draw $U^i_k, E^i_k$ from the proposal density in eq. (9), compute $P^i_k$ by adding the vector $U^i_k$ to $P^i_{k-1}$.
- Apply algorithm 2 to all previously initialized WiFi APs in order to update their posterior distribution of eq. (6) and compute the contribution $I^i_W$.

- Update the particle weights as in eq. (10) where $I^i_M$ is computed like in FootSLAM [7, eq. (5)].

- Decide if any detected but not yet employed AP should be processed according to some rule such the ones described before, for example

- Static or dynamic number of RSS measurements collected
- Threshold on the minimum signal strength received and, if so, initialize new APs' posterior of eq. (8) by applying the algorithm 1.

- Update the map M as in FootSLAM [7,eq. (4)].
- Resampling can be performed if required.

**Real world experiments and results**

Extensive real data measurements were carried out to validate the proposed method in an indoor area of about 20 x20 m and occupied by offices (refer to Fig. 9). A laptop is used equipped with an internal network device Link 5100, compliant with IEEE 802.11 a/b/g, and carried by a human operator. Odometry was computed from the signals of a foot mounted IMU) In this example, the measurements were collected using a freeware working under Windows 7 OS. Two APs (squares in Fig. 9) are employed, a Cisco AiroNet 1130 and an Apple Airport Extreme A1301 respectively, both IEEE 802.11 a/b/g compliant.

**Preliminary results**

A preliminary analysis was carried out in the testbed depicted in Fig. 9, where two competing paths are employed: the line with circles is the real path, while the dotted line with crosses is a path corrupted by synthetic noise which mimics the heading noise typical of IMUs.

To test a realistic scenario 10 datasets were taken following the same path (the line with circles) during office hours, with the Wifi APs fully operative.

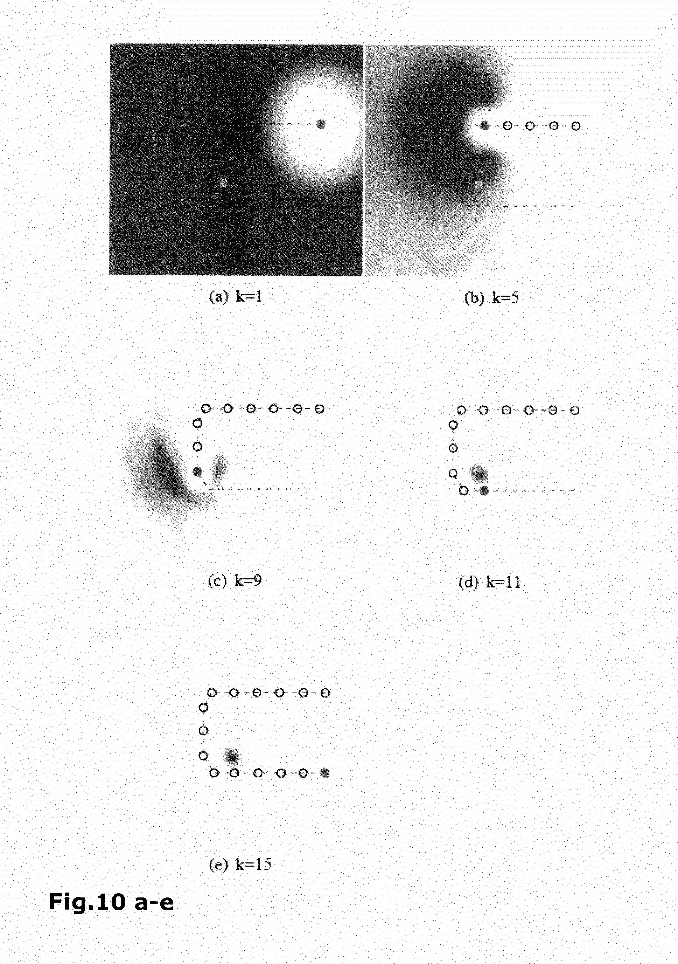

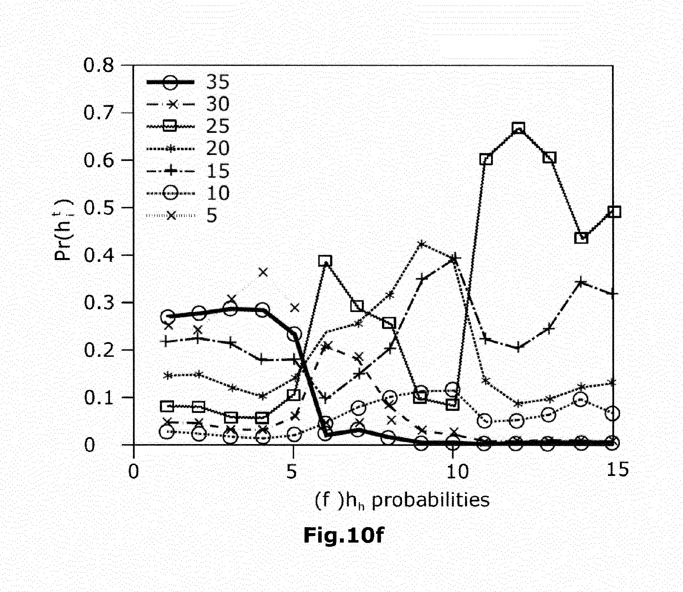

In the first experiment one AP was mapped using the user's known positions. For estimating the reference signal strength 7 values in the range [-35,-5] dB (5 dB spacing) were considered, while the standard deviation $\sigma$ is set to 3 dB. As for the other parameters $d_0 = 1,6, \alpha = 2, N_{peaks} = 10$ was always used. In Fig.10.a one can see that the W pdf after the first RSS, depicted on the map is very spread, due to the mixture of several donut-shaped pdf, and only at k=5 a better resolution is shown (Fig. 10.b). Interestingly, after the first turn some ambiguity remains (Fig. 10.c), and a second turn is required (Fig. 10.d-e). The reason for this is visible in Fig. 10.f, where the corresponding $h_h$ probabilities are presented: the mapping is well performed when one reference strength (in this case -25 dB) wins over the others (after about k=10 steps). This is the price paid for the h estimation.

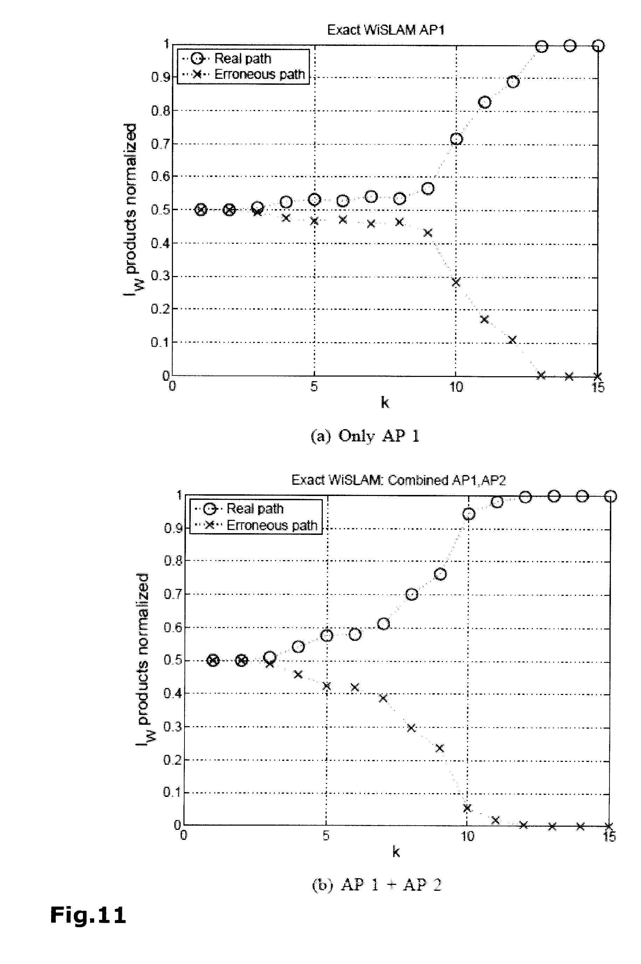

Mapping is just a crucial part of SLAM, but not the only one. The final goal is to show that RSS measurements are able to distinguish between the real user's path from a competing one, affected by the heading error typical of odometry. As a figure of merit the product of the weights $I_{W}^{i}$ over time, normalized for simplicity was used. The results are averaged on all the datasets available. As an example, in Fig. 9 two competing paths (the correct path is the line with circles) are depicted along with the APs' position, and in Fig. 10 the $I_{W}^{i}$ products are shown for both, highlighting the capability of the invention to discriminate between the two paths after few steps. Furthermore, a case with only the contribution of AP 1 (Fig. 11.a) and a case with both (Fig. 11.b), in which there are clear benefits were considered.

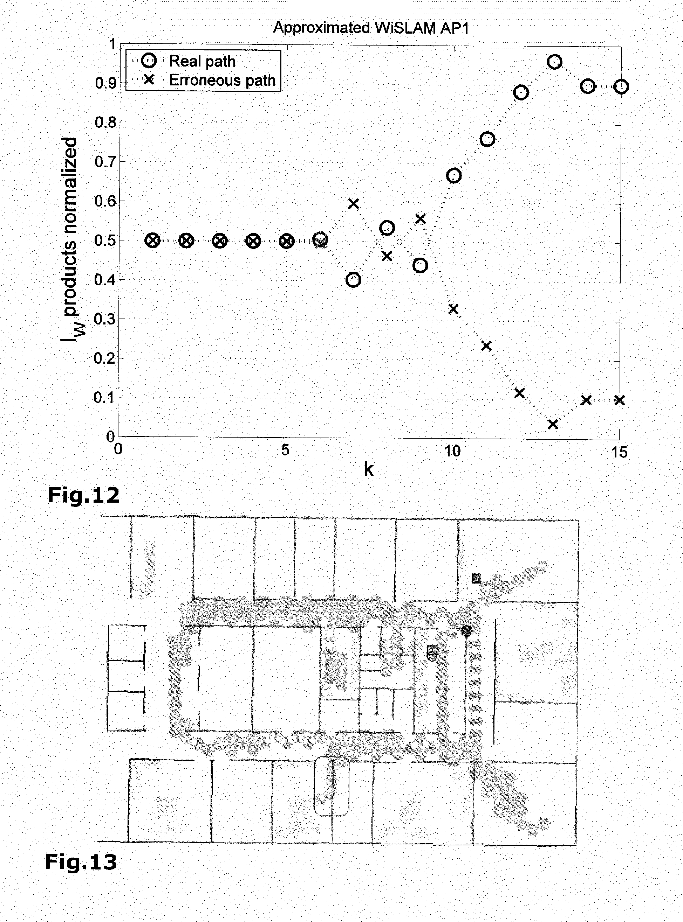

The approximated WiSLAM is a computationally more inexpensive version of the full algorithm. Its effectiveness has been supported by experiments: as an example Fig. 12 shows the results in the same case as in Fig. 11.a. Here, the algorithm starts at k=5 and one can see that with a little delay the expected performance is achieved.

**Final results**

The results of the approximated version of WiSLAM (algorithm 3) applied to a walk of about 5 minutes in the floor whose map is represented in Fig. 9 are presented now. Both the APs as before were employed, and the results are shown in Fig. 13, where the estimated floor map (hexagons) is overlapped to the real one and also furniture is shown.

One can see that the building map is very accurate except for the part indicated by an empty black rectangle (the room on the right was actually entered). As for the WiFi Map, the actual position of the APs are shown as squares and their estimations are shown as circles: the former AP is positioned with great accuracy, while the latter one shows an error limited to few meters.

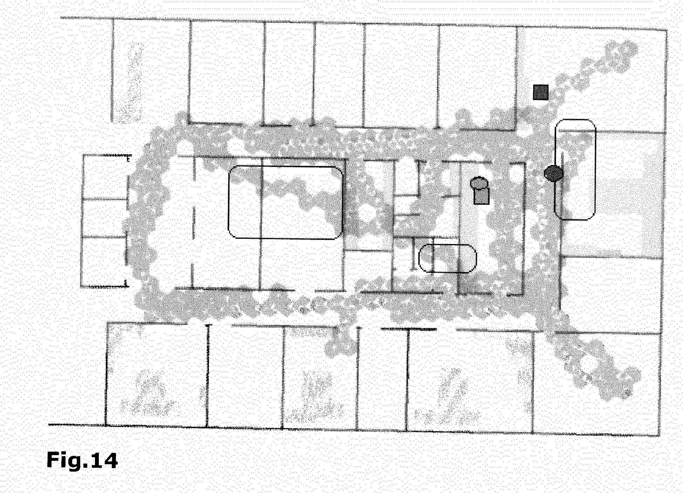

In the same situation it was tried to show the contribution of the WiFi RSS measurements by considering in the particle filtering weights only their likelihood (or equivalently $I_{M}^{i}$ to a constant value in eq. (10) was set). The resulting map is showed in Fig. 14 together with the main mistakes in the map. Even if more errors are visible with respect to the case in Fig. (13), the results the results show the remarkable information provided by RSS measurements.

**Areas of industrial applications**

Indoor Positioning, navigation devices and services, mobile services, travel assistance/navigation, pedestrian navigation, wireless networking.

**Abbreviations**

SLAM        Simultaneous Localization And Mapping

IMU         Inertial Measurement Unit

WLAN        Wireless Local Area Network

AP          Access Point

UE          User Equipment

RSS         Received Signal Strength

RFID        Radio Frequency IDentification

RBPF        Rao-Blackwellized Particle Filter

TOA         Time Of Arrival

AOA         Angle Of Arrival

GMM         Gaussian Mixture Model

PDF         Probability Density Function

TOA         Time of Arrival

TDOA        Time Difference of Arrival

**Known references**

[1] L. Bruno and P. Robertson. WiSLAM: improving FootSLAM with WiFi. To appear in Guimaraes, Portugal, IPIN, Sept. 2011.

[2] H. Durrant-Whyte and T. Bailey. Simultaneous localization and mapping: part i. IEEE Robot. Autom, Mag., 13(2): 99 -110, june 2006.

[3] E. Menegatti, A. Zanella, S. Zilli, F. Zorzi, and E. Pagello. Range-only slam with a mobile robot and a wireless sensor networks. In Robot. And Autom., 2009. ICRA '09. IEEE Int. Conf. on, pages 8 -14, May 2009.

[4] B, Krach and P. Roberston. Cascaded estimation architecture for integration of foot- mounted inertial sensors. In Position, Location and Navigation Symposium, 2008 IEEE/ION, pages 112 -119, May 2008.

[5] S. Beauregard, Widyawan, and M. Klepal. Indoor pdr performance enhancement using minimal map information and particle filters. In Position, Location and Navigation Symposium, 2008 IEEE/ION, pages 141 -147, May 2008.

[6] O. Woodman and R. Harle. Pedestrian localisation for indoor environments, In Proc. of the 10th Int. Conf. on Ubiquitous computing, UbiComp '08, pages 114-123, New York, NY, USA, 2008. ACM.

[7] P. Robertson, M. Angermann, and B. Krach. Simultaneous localization and mapping for pedestrians using only foot-mounted inertial sensors. In Proc. of the 11th Int. Conf. on Ubiquitous computing, Ubicomp '09, pages 93-96, New York, NY, USA, 2009. ACM.

[8] P. Robertson, M. Angermann, and M. Khider. Improving simultaneous localization and mapping for pedestrian navigation and automatic mapping of buildings by using online human-based feature labeling. In Position Location and Navigation Symposium (PLANS), 2010 IEEE/ION, pages 365 -374, May 2010.

[9] P. Bahl and V. Padmanabhan. Radar: An in-building rf-based user location and tracking system. Proc. of IEEE INFOCOM 2000, pages 775-784, Mar 2000.

[10] M. Youssef and A. Agrawala, The horus location determination system. Wireless Networks, 14:357-374, 2008,

[11] R. Battiti and R, Brunato. Statistical learning theory for location fingerprinting in wireless lans. Computer Networks, 47(6), April 2005.

[12] P. Addesso, L. Bruno, and R. Restaino. Integrating RSS from unknown access points in WLAN positioning. To appear in Istanbul, Turkey, IWCMC, July 2011.

[13] B. Ferris, D. Fox, and N. Lawrence. Wifi-slam using gaussian process latent variable models. In In Proc. of IJCAI 2007, pages 2480-2485, 2007,

[14] J. Huang, D. Millman, M. Quigley, D. Stevens, S. Thrun, A. Aggarwal. Efficient, Generalized Indoor WiFi Graph-SLAM. In Proc. of ICRA 2011.

[15] P. Roberston, M, Garcia Puyol, and M. Angermann. Collaborative pedestrian mapping of buildings using inertial sensors and footslam. To appear in Portland, Oregon, USA, ION, Sept. 2011.

[16] M.S. Arulampalam, S. Maskell, N. Gordon, and T. Clapp. A tutorial on particle filters for online nonlinear/non-gaussian bayesian tracking, IEEE Trans. Signal Process., 50(2):174-188, Feb 2002.

[17] E. Foxlin. Pedestrian tracking with shoe-mounted inertial sensors. IEEE Computer Graphics and Applications, 25(6):3S--46, Nov. 2005.

**Claims**

1. Method for localisation and mapping of pedestrians or robots using Wireless Access Points comprising the following steps:

   - received Wireless Signal Strength (RSS) measurements and/or time delay measurements from wireless access points (AP) (e.g. Wireless Local Area Network access points (WLAN, Wifi, WIMAX), or mobile radio base stations (e.g. GSM, UMTS, LTE, 4G, IS95) or RFID tags or transmitters) are taken at regular or irregular time instances by a device carried by the pedestrian or robot
   - providing odometry measurements (e.g. human step measurements, human pedestrian dead-reckoning, robot or wheelchair wheel counter measurements, robot motor or wheelchair motor control inputs) also to be carried by the pedestrian or robot, and
   - providing a particle filter which has a state model that comprises the pedestrian or robot location history for each particle, and also the location probability distribution of one or more wireless access points,
   - wherein at each time-step of the particle filter each particle of the particle filter is weighted and/or propagated according to the odometry measurements and weighted and/or propagated according to the wireless measurement,
   - wherein at each time-step of the particle filter the location probability distribution of the wireless access points for each particle is updated according to the measurement and the previous location probability distribution of that particle, and
   - wherein the location of the pedestrian or robot and/or the map of the wireless access point(s) is extracted from the particle population (e.g. from the state of the particle with greatest weight, from the weighted state across all particles, from the state of a randomly chosen particle, from the state of the maximum likelihood particle).

2. Method according to claim 1, wherein preprocessing of the RSS and/or time delay measurements to determine which APs should be processed, for example by assigning a threshold of signals strength or time-of-arrival or time-difference-of-arrival which is used to determine that an AP is suitably close to be useful and located on the same floor level.

3. Method according to claim 1 or 2, wherein preprocessing of the RSS and/or time delay measurements to exclude outliers of the measurements (e.g. using well known outlier detection algorithms to remove data).

4. Method according to any one of claims 1 to 3, wherein preprocessing of the RSS and/or time delay measurements to filter the measurements (e.g. low-pass filtering or down- or up-sampling).

5. Method according to any one of claims 1 to 4, wherein preprocessing of the RSS and/or time delay measurements to determine which time instances of the signal from an AP should be processed (i.e. pruning the signal).

6. Method according to any one of claims 1 to 5, wherein measurements from more than one walk (from the same user of different users) in the same area are combined,

7. Method according to any one of claims 1 to 6, wherein the state space is extended to three dimensions by including the height of the user in the user position and the height of the AP in the map by using either a full 3D representation or a discrete third (height) dimension (called 2 ½ D).

8. Method according to any one of claims 1 to 7, wherein during usage of the map or during a second or further SLAM stage it is detected whether APs have moved wherein moved APs are determined by observing the weight contributions of particles from a respective AP allowing detection of a mismatch between the previous estimated map and new measurements for that AP.

Fig.1

Fig.2

At instant k

Memory

RSS meas. $Z_k^W$

Step Meas. $Z_k^U$

Particle Filter

User's trajectory $P_k$

WiFi Map est. W

Building Map est. M

**Fig.3**

(a) k=1

(b) k=3

(c) k=5

(d) k=7

(e) k=9

(f) k=11

Fig.4

**Fig.5**

**Fig.6**

Recursion for AP n at arbitrary time after initialization

Recursion for AP 2 at arbitrary time after initialization

Recursion for AP 1 at arbitrary time after initialization

| k-1 | k | k+1 |

RSS[k]

Released

P[k]

$h_1$ · $h_{Nh}$

| Compute newdonut parameters | · | Compute donuts parameters |

$N_h$ x$N_{Peaks}$ Peaks

| Update all peaks | Find intersections among donuts |

| Fuse/Remove peaks | · | Average intersections within $\gamma$ and assign each a "counter" |

Power hypotheses probabilities

| Compute peak's parameters and coefficients and get $p(W|h_1, RSS[1:k], P[1:k])$ | · | Compute peak's parameters and coefficients and get $p(W|h_{Nh}, RSS[1:k], P[1:k])$ |

| Update the power hypotheses probabilities and compute $I^W$ | $I^W ->$ weighting |

Release "donut" and eliminated peaks

RSS[k+1]

P[k+1]

$N_h$ x$N_{Peaks}$ Peaks

$N_h$ power hypotheses probabilities

**Fig.7**

**Fig.8**

**Fig.9**

(a) k=1

(b) k=5

(c) k=9

(d) k=11

(e) k=15

**Fig.10 a-e**

**Fig.10f**

(a) Only AP 1

(b) AP 1 + AP 2

**Fig.11**

**Fig.12**

**Fig.13**

**Fig.14**

Europäisches
Patentamt

European
Patent Office

Office européen
des brevets

# EUROPEAN SEARCH REPORT

Application Number

EP 12 15 7532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/054076 A1 (EVENNOU FREDERIC [FR] ET AL) 26 February 2009 (2009-02-26) | 1-6 | INV. G01C21/16 G01C22/00 G01C21/20 |
| A | * paragraphs [0083], [0087] - [0109], [0122] - [0145], [0167], [0173] - [0198] * <br> * figure 1 * | 7,8 | |
| X,D,P | LUIGI BRUNO ET AL: "WiSLAM: Improving FootSLAM with WiFi", INDOOR POSITIONING AND INDOOR NAVIGATION (IPIN), 2011 INTERNATIONAL CONFERENCE ON, IEEE, 21 September 2011 (2011-09-21), pages 1-10, XP031990131, DOI: 10.1109/IPIN.2011.6071916 ISBN: 978-1-4577-1805-2 * the whole document * | 1-8 | |

TECHNICAL FIELDS
SEARCHED (IPC)

G01C
G05D
G01S
H04W

The present search report has been drawn up for all claims

| Place of search | Date of completion of the search | Examiner |
|---|---|---|
| The Hague | 25 July 2012 | Kuhn, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 15 7532

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2012

| Patent document cited in search report | Publication date | Patent family member(s) | Publication date |
|---|---|---|---|
| US 2009054076 A1 | 26-02-2009 | AT 468725 T | 15-06-2010 |
| | | EP 1886517 A2 | 13-02-2008 |
| | | FR 2886501 A1 | 01-12-2006 |
| | | US 2009054076 A1 | 26-02-2009 |
| | | WO 2006129003 A2 | 07-12-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011033100 A

**Non-patent literature cited in the description**

- **L. BRUNO ; P. ROBERTSON.** WiSLAM: improving FootSLAM with WiFi. To appear in Guimaraes, Portugal. *IPIN,* September 2011
- **H. DURRANT-WHYTE ; T. BAILEY.** Simultaneous localization and mapping: part i. *IEEE Robot. Autom, Mag.,* June 2006, vol. 13 (2), 99-110
- **E. MENEGATTI ; A. ZANELLA ; S. ZILLI ; F. ZORZI ; E. PAGELLO.** Range-only slam with a mobile robot and a wireless sensor networks. *Robot. And Autom., 2009. ICRA '09. IEEE Int. Conf. on,* May 2009, 8-14
- **B, KRACH ; P. ROBERSTON.** Cascaded estimation architecture for integration of foot- mounted inertial sensors. *Position, Location and Navigation Symposium, 2008 IEEE/ION,* May 2008, 112-119
- **S. BEAUREGARD ; WIDYAWAN ; M. KLEPAL.** Indoor pdr performance enhancement using minimal map information and particle filters. *Position, Location and Navigation Symposium, 2008 IEEE/ION,* May 2008, 141-147
- Pedestrian localisation for indoor environments. **O. WOODMAN ; R. HARLE.** Proc. of the 10th Int. Conf. on Ubiquitous computing, UbiComp '08. ACM, 2008, 114-123
- Simultaneous localization and mapping for pedestrians using only foot-mounted inertial sensors. **P. ROBERTSON ; M. ANGERMANN ; B. KRACH.** Proc. of the 11th Int. Conf. on Ubiquitous computing, Ubicomp '09. ACM, 2009, 93-96
- **P. ROBERTSON ; M. ANGERMANN ; M. KHIDER.** Improving simultaneous localization and mapping for pedestrian navigation and automatic mapping of buildings by using online human-based feature labeling. *Position Location and Navigation Symposium (PLANS), 2010 IEEE/ION,* May 2010, 365-374

- **P. BAHL ; V. PADMANABHAN.** Radar: An in-building rf-based user location and tracking system. *Proc. of IEEE INFOCOM 2000,* March 2000, 775-784
- **M. YOUSSEF ; A. AGRAWALA.** The horus location determination system. *Wireless Networks,* 2008, vol. 14, 357-374
- **R. BATTITI ; R, BRUNATO.** Statistical learning theory for location fingerprinting in wireless lans. *Computer Networks,* April 2005, vol. 47 (6
- **P. ADDESSO ; L. BRUNO ; R. RESTAIN.** Integrating RSS from unknown access points in WLAN positioning. *IWCMC,* July 2011
- **B. FERRIS ; D. FOX ; N. LAWRENCE.** Wifi-slam using gaussian process latent variable models. *In Proc. of IJCAI 2007,* 2007, 2480-2485
- **J. HUANG ; D. MILLMAN ; M. QUIGLEY ; D. STEVENS ; S. THRUN ; A. AGGARWAL.** Efficient, Generalized Indoor WiFi GraphSLAM. *Proc. of ICRA,* 2011
- **P. ROBERSTON ; M, GARCIA PUYOL ; M. ANGERMANN.** Collaborative pedestrian mapping of buildings using inertial sensors and footslam. *Portland, Oregon, USA, ION,* September 2011
- **M.S. ARULAMPALAM ; S. MASKELL ; N. GORDON ; T. CLAPP.** A tutorial on particle filters for online nonlinear/non-gaussian bayesian tracking. *IEEE Trans. Signal Process.,* February 2002, vol. 50 (2), 174-188
- **E. FOXLIN.** Pedestrian tracking with shoe-mounted inertial sensors. *IEEE Computer Graphics and Applications,* November 2005, vol. 25 (6), 3S-46